# EUROPÄISCHE PATENTSCHRIFT

(11) **EP 2 199 751 B1**
(45) Veröffentlichungstag und Bekanntmachung des Hinweises auf die Patenterteilung: **08.08.2012**
(21) Anmeldenummer: 08022133.6
(22) Anmeldetag: 19.12.2008
(51) Int. Cl.: G01D 5/241

(54) **Kapazitiver Drehwinkelsensor**
Capacitative rotation angle sensor
Capteur d'angle de rotation capacitif

(43) Veröffentlichungstag der Anmeldung: 23.06.2010
(73) Patentinhaber: MENTOR GmbH & Co. Präzisions-Bauteile KG, D-40699 Erkrath (DE)
(72) Erfinder: Tüblüker, Hüseyin, 42549 Velbert (DE); Overdick, Daniel, 40229 Düsseldorf (DE)
(74) Vertreter: Sparing Röhl Henseler

(56) Entgegenhaltungen:
- WO-A-03/023329
- DE-A1- 3 711 062
- DE-A1- 4 232 116
- US-B1- 6 492 911

## Beschreibung

Die Erfindung betrifft einen kapazitiven Drehwinkelsensor nach dem Oberbegriff des Anspruchs 1.

Aus DE 37 11 062 A1 ist eine kapazitive absolute Positionsmessvorrichtung für Drehbewegungen bekannt. Die Positionsmessvorrichtung besteht aus einer elektronischen Ansteuer- und Auswerteschaltung. Es ist eine Statorplatte und eine Rotorplatte vorgesehen, die sich axial gegenüberstehen. Auf der Statorplatte befinden sich Referenzpotenzialelektroden, in die von der Ansteuerschaltung eine Spannung eingespeist wird, die abwechselnd zwischen zwei Referenzpotenzialen umgeschaltet wird. Von auf der Rotorplatte befindlichen Sensorelektroden wird eine Wechselspannung zur Bestimmung der Drehposition abgegriffen.

Eine Veränderung der eingespeisten Spannung oder des Abstands von Sensorelektroden zu Referenzpotenzialelektroden kann zu erheblichen Änderungen der abgegriffenen Wechselspannungen, die die Drehposition repräsentieren, führen, weshalb in der bekannten Positionsmessvorrichtung eine zweite Statorplatte verwendet wird. Dieser Ausbau ist aufwändig und führt u.a. zu einer zusätzlichen Verkabelung und größeren Außenabmessungen der Positionsmessvorrichtung.

Aus DE 42 32 116 C2 ist eine Anordnung für einen kapazitiven Drehwinkelsensor bekannt, die ein spezielles Elektrodenlayout verwendet. Mit dem speziellen Elektrodenlayout, bei dem die von der Drehachse in Umfangsrichtung gerichtete Begrenzung von Stator- und Rotorelektroden in einer radial von der Drehachse ausgehenden Linie gestuft geformt ist, wird erreicht, dass ein mittlerer Elektrodenabstand unabhängig vom Drehwinkel konstant bleibt, da er aus Flächenanteilen gebildet wird, die in der Summe gleichzeitig alle Gebiete der kapazitiven Fläche erfassen.

Ein derartig ausgebildetes Elektrodenlayout ist aufwändig in der Herstellung, da die Form der Stator- und Rotorelektroden aufeinander abgestimmt sein muss. Ferner werden zur Auswertung zusätzliche, um Stator- und Rotorelektrode ringförmig angeordnete Koppelelektroden verwendet, deren Herstellung die Anordnung sowohl räumlich vergrößern als auch die Herstellungskosten teurer werden lässt.

Aus WO 03/023329 A1 ist ein Drehwinkelgeber bekannt, bei dem an Segmenten eines Erregerelements mittels einer elektronischen Signalquelle Signale erzeugbar sind, die von einem, die Segmente überlappenden Empfängersegment empfangen werden können, wobei das Empfängersegment mit einer Signalverarbeitungsschaltung zur Auswertung der Drehwinkelposition zwischen Erregerelement und Empfängersegment verbunden ist.

Aus US 6 492 911 B1 ist ein kapazitiver Drehwinkelgeber nach dem Oberbegriff des Anspruchs 1 bekannt.

Aufgabe der Erfindung ist es, einen kapazitiven Drehwinkelgeber nach dem Oberbegriff des Anspruchs 1 zu schaffen, der einfach aufgebaut ist und zudem flexiblere Einsatzmöglichkeiten trotz seines einfachen Aufbaus ermöglicht.

Die Aufgabe wird gemäß den Merkmalen des Anspruchs 1 gelöst.

Hierdurch wird ein kapazitiver Drehwinkelgeber geschaffen, der ein erstes und ein zweites Teil umfasst. Das erste Teil ist um eine Drehachse relativ zum zweiten Teil drehbar beweglich, und das zweite Teil weist mindestens drei dem ersten Teil zugewandte, voneinander isolierte, in Richtung der Drehbewegung der Drehachse voneinander beabstandete Kondensatorelektroden auf. Die Kondensatorelektroden des zweiten Teils sind mit dem ersten Teil zumindest teilweise miteinander in Überlappung bringbar. Das erste Teil ist ein auf schwebendem Potenzial befindliches Geberelementfürdie Kondensatorelektroden in Form eines metallischen Exzenters. Schwebendes Potenzial bedeutet in diesem Zusammenhang, dass keine Spannung von außen über eine angeschlossene Spannungsquelle aufgeprägt wird. Der Exzenter ist einfach herstellbar und an keine feste Form in Abhängigkeit der Form der Kondensatorelektroden gebunden. Die Bedingung hinsichtlich der Form des Exzenters ist die, dass der Exzenter bei einem vollen Umlauf um die Drehachse jede der mindestens drei Kondensatorelektroden zumindest teilweise überlappt bzw. überstrichen hat. Der Abstand des Exzenters in Richtung zur Drehachse bzw. entlang dieser zwischen den Kondensatorelektroden und dem Exzenter ist variierbar, so dass vielfältigste und flexible Einsatzmöglichkeiten des Drehwinkelgebers bestehen. Neben Drehbewegungen können auch Druck- oder Zugbewegungen in Richtung der Drehachse detektiert werden. Die Lage des Exzenters ist auf absolute Weise dreidimensional erfassbar. Die Kondensatorelektroden sind jeweils über eine Abgriffleitung mit einer Auswerteeinrichtung verbunden zur Bestimmung der Ladungsmenge jeder Kondensatorelektrode. Die Auswerteeinrichtung erzeugt ein die absolute Position des zweiten Teils zum ersten Teil repräsentatives Signal, wobei auch der Abstand zwischen Exzenter und Kondensatorelektroden bezogen auf die Drehachse berücksichtigt wird. Über die Betrachtung eines Vergleichs der Ladungsmenge der einzelnen Kondensatorelektroden ist eine einfache Bestimmung der Position des Exzenters möglich.

Bevorzugt sind die Kondensatorelektroden auf einer planen Oberfläche flächig in einer Ebene ausgebildet, und der Exzenter weist eine den Kondensatorelektroden zugewandte parallele Fläche auf, so dass eine sehr genaue Angabe der absoluten Lage des Exzenters in Bezug auf die Kondensatorelektroden ermöglicht ist.

Für eine besonders einfache Ausgestaltung der Kondensatorelektroden sind diese um die Drehachse abschnittsweise ringförmig angeordnet. Gleichförmige Abschnitte sind bevorzugt, so dass jede Kondensatorelektrode einen im wesentlichen gleichen Flächeninhalt aufweist, so dass für jede Kondensatorelektrode eine vom Wert her gleiche Referenzladung verwendet werden kann. Die Verwendung gleichförmiger Kondensatorelektroden vereinfacht die Auswertung, da verschiedene Formen der Kondensatorelektroden und ein entsprechendes unterschiedliches Kapazitätsverhalten nicht berücksichtigt werden müssen.

Bevorzugt ist das erste Teil in verschiedenen vorbestimmten Abständen zum ersten Teil mit einer Rasteinrichtung verrastbar, so dass diskrete Abstände des Exzenters von den Kondensatorelektroden ermittelt werden können. Durch die Verrastung ist zudem eine "haptische" Rückmeldung bei der Betätigung in Richtung der Drehachse bei Zug- oder Druckbewegungen möglich.

Vorzugsweise kann das erste Teil bezogen auf die Richtung längs der Drehachse zum ersten Teil federvorgespannt sein, so dass ein Widerstand vorliegt, den Exzenter in Richtung längs der Drehachse zu bewegen. Der Widerstand bzw. die Federvorspannung kann derart sein, dass der Exzenter durch die Federvorspannung in seine ursprüngliche Lage hinsichtlich des Abstands zu den Kondensatorelektroden nach Beaufschlagung mit einer Kraft in Richtung der Drehachse zurückkehrt, sobald die Kraftausübung beendet ist.

Zur vereinfachten Bestimmung des Abstands des ersten Teils vom zweiten Teil, auf dem die Kondensatorelektroden angeordnet sind, ist ein Summationselement zum Aufaddieren der Ladungsmengen der Kondensatorelektroden vorgesehen. Ein Vergleichselement bestimmt den Abstand zwischen erstem und zweitem Teil anhand der ermittelten Summe der Ladungsmengen. Damit ist eine einfache Bestimmung der dreidimensionalen Lage des ersten Teils bezogen auf das zweite Teil möglich, da sich bei einer Änderung des Abstands längs der Drehachse von Exzenter und Kondensatorelementen die Summe der Ladungsmengen ändert, das Verhältnis der Ladungsmengen der Kondensatorelektroden jedoch nicht.

Zur Erzielung einer besonders kompakten und einfachen Bauweise des Drehwinkelsensors sind die Kondensatorelektroden auf einer Platine angeordnet, die eine Begrenzungsfläche eines Gehäuses für den Drehwinkelsensor bildet. Auf der den Kondensatorelektroden gegenüberliegenden Seite der Platine sind Schnittstellen vorgesehen für die Abgriffleitungen und/oder die Auswerteeinrichtung. Um einen Schutz für die Platine vorzusehen, kann es aber auch vorgesehen sein, dass die Platine vollständig von einem Gehäuse umschlossen ist und gerade nicht ein Bestandteil des Gehäuses ist.

Für eine flexible Gestaltung und eine einfache Bereitstellung von Schnittstellen eventuell für eine Programmierung der Auswerteeinrichtung ist die Auswerteeinrichtung als Mikrocontroller ausgeführt.

Weitere Ausgestaltungen der Erfindung sind der nachfolgenden Beschreibung und den Unteransprüchen zu entnehmen.

Die Erfindung wird nachstehend anhand eines in den beigefügten schematischen Abbildungen dargestellten Ausführungsbeispiels näher erläutert.
Fig. 1 zeigt eine schematische Darstellung eines erfindungsgemäßen kapazitiven Drehwinkelsensors in einem teilweisen Schnitt;
Fig. 2 zeigt eine schematische Darstellung von Kondensatorelektroden gemäß der in Fig. 1 gezeigten Ausführungsform;
Fig. 3 zeigt ein Signaldiagramm der Kondensatorelektroden bei einer 360°-Umdrehung für den Drehwinkelsensor aus Fig. 1;
Fig. 4 zeigt eine Verschaltung in einer schematischen Prinzipdarstellung;
Fig. 5a zeigt den Drehwinkelsensor gemäß Fig. 1 in einer ersten Stellung;
Fig. 5b zeigt von einer Auswerteschaltung erzeugte Signale bei der in Fig. 5a gezeigten Stellung;
Fig. 6a zeigt den Drehwinkelsensor gemäß Fig. 1 in einer zweiten Stellung;
Fig. 6b zeigt von einer Auswerteschaltung erzeugte Signale bei der in Fig. 6a gezeigten Stellung.

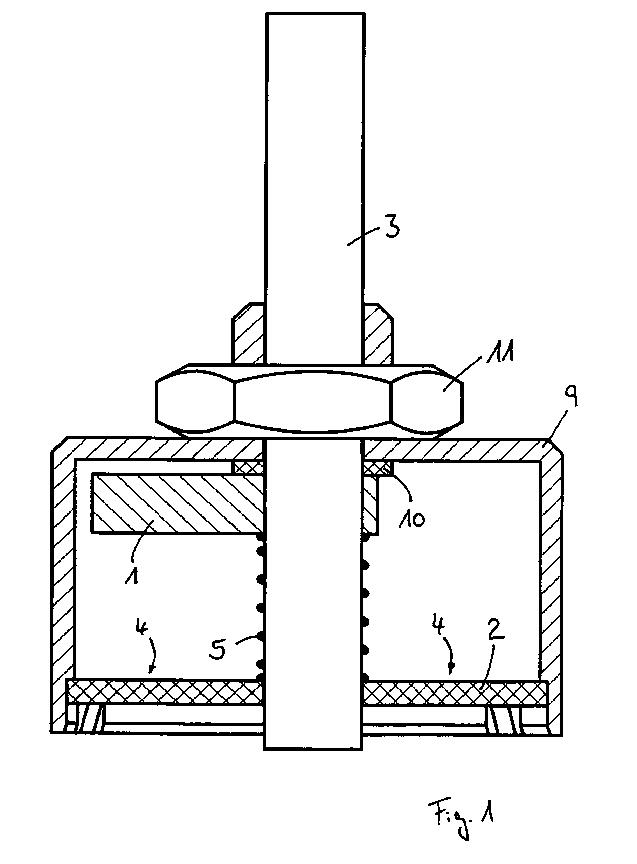

In Fig. 1 ist ein erfindungsgemäßer kapazitiver Drehwinkelsensor in einem teilweisen Schnitt gezeigt. Der Drehwinkelsensor umfasst ein erstes Teil 1 und ein zweites Teil 2. Das erste Teil 1 ist um eine Drehachse relativ zum ersten Teil drehbar beweglich. Die Drehachse wird durch eine Welle 3 gebildet. Das zweite Teil 2 ist fest in einem Gehäuse 9 eingebaut. Das erste Teil 1 ist als ein an der Welle 3 befestigter metallischer Exzenter ausgebildet.

Für eine Drehbewegung ist die Welle 3 mit dem Exzenter als erstem Teil 1 über ein Distanzstück 10 und eine Mutter 11 in dem Gehäuse 9 drehbar befestigt.

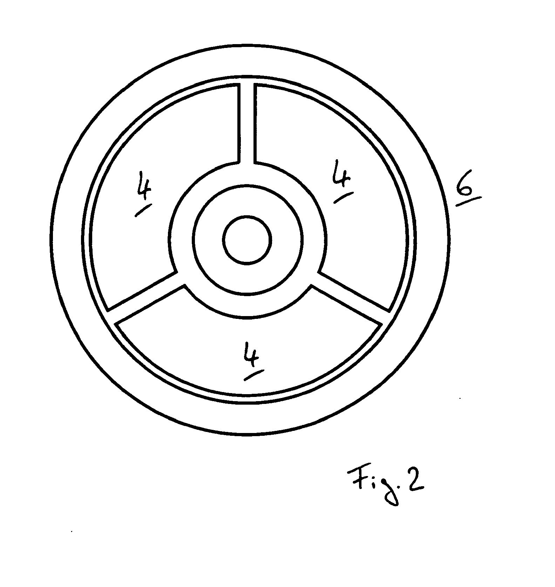

Auf dem zweiten Teil 2 sind gemäß Fig. 2 drei dem ersten Teil 1 zugewandte, voneinander isolierte, in Richtung der Drehbewegung der Welle 3 voneinander beabstandete Kondensatorelektroden 4 angeordnet. Die Kondensatorelektroden 4 der dargestellten Ausführungsform überdecken einen Winkelbereich von annähernd 120° und sind ringförmig um die Drehachse bzw. Welle 3 ausgebildet. Die Kondensatorelektroden 4 weisen im wesentlichen die gleiche Fläche auf und sind in ihrer Form nahezu identisch jeweils in Form eines Kreisringsegments ausgestaltet.

Die Kondensatorelektroden 4 sind auf einer planen Oberfläche, die durch eine Platine 6 gebildet wird, flächig in einer Ebene ausgebildet, und der Exzenter weist eine den Kondensatorelektroden 4 zugewandte, im wesentlichen parallel zu diesen ausgerichtete Fläche auf.

Das als Exzenter ausgestaltete erste Teil 1 überdeckt bei einer Drehbewegung die Kondensatorelektroden 4 zumindest teilweise. Das erste Teil 1 überlappt einen Bereich der Kondensatorelektroden 4 und bildet einen Überlappungsbereich, der mit der Drehbewegung des ersten Teils 1 variiert.

Das als Exzenter ausgestaltete an der Welle 3 befestigte erste Teil 1 ist ein auf schwebendem Potenzial befindliches Geberelement für die Kondensatorelektroden 4, was bedeutet, dass das erste Teil 1 mit keiner Spannungsquelle verbunden ist, die dem ersten Teil 1 eine elektrische Spannung aufgeprägt. Statt dessen ist das erste Teil 1 mit Masse verbunden oder elektrisch isoliert gegenüber der Umgebung.

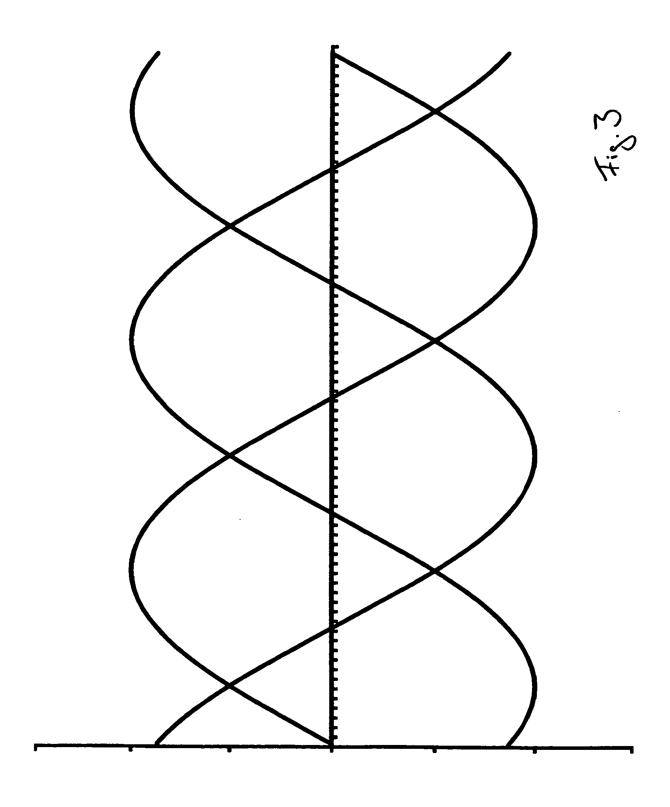

In Fig. 3 sind die Signale der drei Kondensatorelektroden 4 des Drehwinkelsensors gemäß Fig. 1 gezeigt. Die Signale sind sinusförmig und um 124° entsprechend einer Vollumdrehung von 360° durch die Anzahl der Kondensatorelektroden verschoben. Dementsprechend lässt sich die Stellung des Exzenters über den Kondensatorelektroden 4 zurückrechnen.

Sofern bei einer nicht dargestellten Ausführungsform vier gleiche kreisringsegmentförmige Kondensatorelektroden 4 verwendet werden, so sind die Signale der vier gleichflächigen Kondensatorelektroden 4 um 90° verschoben.

Der Abstand des ersten Teils 1 in Richtung längs der Drehachse von den Kondensatorelektroden 4 ist variierbar bzw. veränderbar. Dazu weist die in Fig. 1 dargestellte Ausführungsform eine Feder 5 auf, die den Exzenter als erstes Teil 1 gegenüber dem zweiten Teil 2, auf dem die Kondensatorelektroden 4 ausgebildet sind, vorspannt. Gegen die Feder 5 muss ein Druck aufgewendet werden, damit sich der Abstand zwischen dem Exzenter als erstem Teil 1 und den auf dem zweiten Teil 2 ausgebildeten Kondensatorelektroden 4 verringert.

An der Welle 3 ist ein durch einen Benutzer betätigbares Handstück vorgesehen bzw. befestigt, mit dem der Benutzer die Welle 3 sowohl drehen, als auch Zug bzw. Druck auf die Welle 3 in Richtung längs der Welle 3 ausüben kann.

In einer nicht dargestellten Ausführungsform können Verrastungselemente vorgesehen sein, um den Exzenter in vorbestimmten Abständen gegenüber den Kondensatorelektroden 4 zu verrasten.

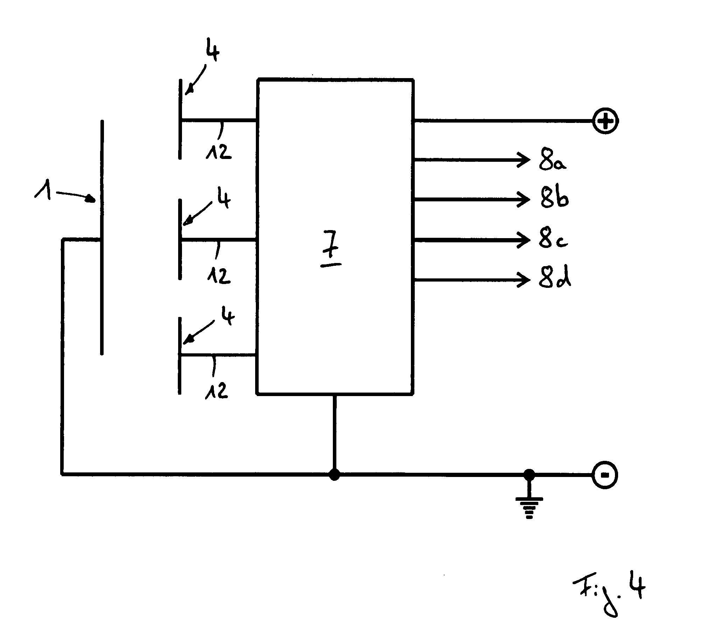

Zur Auswertung der Position des ersten Teils 1 bezogen auf das mit den Kondensatorelektroden 4 ausgebildete zweite Teil 2 ist an jeder Kondensatorelektrode 4 eine Abgriffleitung 12 vorgesehen, die die Kondensatorelektrode 4 mit einer Auswerteeinrichtung 7 verbindet (vgl. Fig. 4). Die Auswerteeinrichtung 7 bestimmt die Ladungsmenge jeder Kondensatorelektrode 4 und erzeugt mindestens ein für die absolute Position des zweiten Teils 2 zum ersten Teil 1 repräsentatives Signal. Der Vergleich der Ladungsmenge auf jeder Kondensatorelektrode 4 kann über einen Referenzkondensator mit definierter Ladungsmenge erfolgen.

Fig. 4 zeigt ein Prinzipschaltbild für eine Verschaltung des Exzenters und der Kondensatorelektroden 4 mit der Auswerteeinrichtung 7. An Ausgängen 8a, 8b, 8c, 8d liegt mindestens ein für die absolute Position des zweiten Teils 2 zum ersten Teil 1 repräsentatives Signal an.

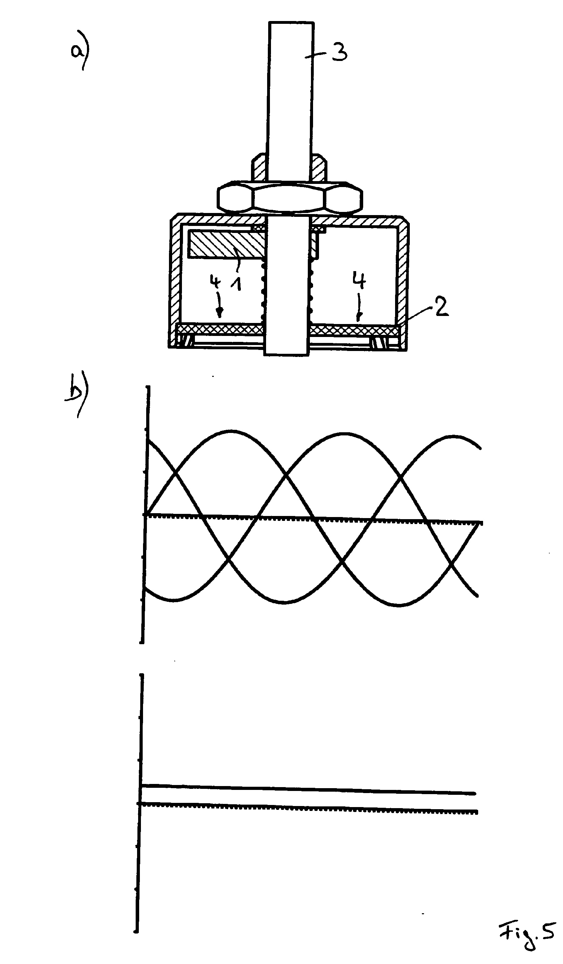

In Fig. 5a ist der Drehwinkelsensor gemäß Fig. 1 in einer ersten Stellung schematisch gezeigt. Fig. 5b zeigt beispielhaft die von der Auswerteeinrichtung 7 erzeugten Signale an den Ausgängen 8a, 8b und 8c von oben nach unten. Die an den Ausgängen 8a und 8b anliegenden Signale geben die absolute Position des Exzenters gegenüber den drei Kondensatorelektroden 4 bezogen auf die Drehrichtung um die Drehachse bzw. Welle 3 an. Das Signal am Ausgang 8c wird verwendet, um den Abstand zwischen dem Exzenter und den Kondensatorelektroden 4 längs der Drehachse anzugeben. Dazu wird in der Auswerteeinrichtung 7 ein Summationselement zum Aufaddieren der Ladungsmengen der Kondensatorelektroden 4 verwendet. Die aufaddierte Ladungsmenge der Kondensatorelektroden 4 wird mit einem Vergleichselement für die Bestimmung des Abstands zwischen Exzenter und Kondensatorelementen 4 verglichen und ein entsprechendes Signal am Ausgang 8c erzeugt.

Beim Drehen des Exzenters um die Welle 3 ändert sich das Signal auf den Kondensatorelektroden 4. Die Summe der Ladungsmengen bleibt jedoch konstant.

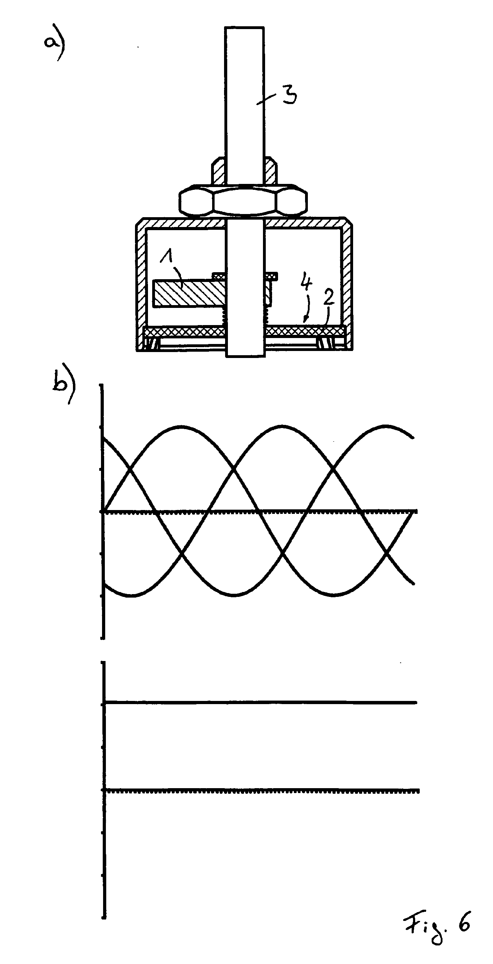

In Fig. 6a ist der Drehwinkelsensor in einer zweiten Stellung gezeigt, in der der Abstand zwischen dem Exzenter und den Kondensatorelektroden 4 verringert wurde bezogen auf die in Fig. 5a gezeigte Stellung.

Fig. 6b zeigt von der Auswerteeinrichtung 7 erzeugte Signale 8a, 8b und 8c bei der in Fig. 6a gezeigten Stellung. Es ist zu erkennen, dass die Signale an den Ausgängen 8a und 8b sich nicht verändert haben, da der Exzenter nicht gedreht wurde, sondern nur der Abstand zwischen Exzenter und Kondensatorelektroden 4 verändert wurde. Die Summe der Ladungsmengen hat sich verändert. Durch die Verringerung des Abstands des Exzenters von den Kondensatorelektroden 4 ist die Summe der Ladungsmengen auf den Kondensatorelektroden 4 größer geworden. Der Abstand des Exzenters von den Kondensatorelektroden 4 ist anhand des an Ausgang 8c anliegenden Signals absolut bestimmbar.

Mit dem dargestellten Ausführungsbeispiel lässt sich der Winkel (die Drehbetätigung der Welle 3) sowie der Abstand zwischen Exzenter und Kondensatorelektroden 4 (die Zug- bzw. Druckbetätigung der Welle 3) absolut bestimmen bzw. messen.

Die Auswerteeinrichtung 7 kann als Mikrocontroller ausgeführt sein, der auf der als Platine 6 ausgestalteten Fläche für die Kondensatorelektroden 4 angeordnet ist. Gemäß Fig. 1 bildet die Platine 6 eine Begrenzungsfläche des Gehäuses 9 für den kapazitiven Drehwinkelsensor. Auf der den Kondensatorelektroden 4 gegenüberliegenden Seite der Platine 6 sind Schnittstellen vorgesehen für die Abgriffleitungen 12 der Kondensatorelektroden 4 und/oder die Auswerteeinrichtung 7. Durch die Verwendung der Platine 6 als eine Begrenzungsfläche des Gehäuses 9 des kapazitiven Drehwinkelsensors ist eine kompakte Bauform möglich.

## Patentansprüche

1. Kapazitiver Drehwinkelsensor umfassend ein erstes und ein zweites Teil (1, 2), von denen das erste Teil (1) um eine Welle (3) als Drehachse relativ zum zweiten Teil (2) drehbar beweglich ist, und das zweite Teil (2) mindestens drei dem ersten Teil (1) zugewandte, voneinander isolierte, in Richtung der Drehbewegung der Drehachse voneinander beabstandete Kondensatorelektroden (4) aufweist, die mit dem ersten Teil (1) zumindest teilweise miteinander in Überlappung bringbar sind, und die Überlappung mit der Drehbewegung variierbar ist, wobei das erste Teil (1) ein auf schwebendem Potenzial befindliches Geberelement für die Kondensatorelektroden (4) in Form eines metallischen Exzenters ist, der an der Welle befestigt ist, und die Kondensatorelektroden (4) jeweils über eine Abgriffleitung (12) mit einer Auswerteeinrichtung (7) verbunden sind zur Bestimmung der Ladungsmenge jeder Kondensatorelektrode (4), und durch die Auswerteeinrichtung (7) ein die absolute Position des zweiten Teils (2) zum ersten Teil (1) repräsentatives Signal erzeugbar ist, **dadurch gekennzeichnet, dass** der Abstand zwischen dem Exzenter und den Kondensatorelektroden (4) längs der Drehachse variierbar ist.

2. Kapazitiver Drehwinkelsensor nach Anspruch 1, **dadurch gekennzeichnet, dass** das erste Teil (1) in verschiedenen vorbestimmten Abständen bezogen auf die Richtung längs der Drehachse zum zweiten Teil (2) mit einer Rasteinrichtung verrastbar ist.

3. Kapazitiver Drehwinkelsensor nach Anspruch 1 oder 2, **dadurch gekennzeichnet, dass** die Kondensatorelektroden (4) auf einer planen Oberfläche flächig in einer Ebene ausgebildet sind und der Exzenter eine den Kondensatorelektroden (4) zugewandte, parallel zu diesen ausgerichtete Fläche aufweist.

4. Kapazitiver Drehwinkelsensor nach einem der Ansprüche 1 bis 3, **dadurch gekennzeichnet, dass** die Kondensatorelektroden (4) zumindest abschnittsweise ringförmig um die Drehachse angeordnet sind und jeweils gleiche Flächeninhalte aufweisen.

5. Kapazitiver Drehwinkelsensor nach einem der Ansprüche 1 bis 4, **dadurch gekennzeichnet, dass** das erste Teil (1) bezogen auf die Richtung längs der Drehachse zum zweiten Teil (2) federvorgespannt ist.

6. Kapazitiver Drehwinkelsensor nach einem der Ansprüche 1 bis 5, **dadurch gekennzeichnet, dass** ein Summationselement zum Aufaddieren der Ladungsmengen der Kondensatorelektroden (4) und ein Vergleichselement für die Bestimmung des Abstands zwischen Exzenter und Kondensatorelementen (4) vorgesehen sind.

7. Kapazitiver Drehwinkelsensor nach einem der Ansprüche 1 bis 6, **dadurch gekennzeichnet, dass** die Kondensatorelektroden (4) auf einer Platine (6) angeordnet sind, und auf der den Kondensatorelektroden (4) gegenüberliegenden Seite der Platine (6) Schnittstellen vorgesehen sind für die Abgriffleitungen (12) und/oder die Auswerteeinrichtung (7).

8. Kapazitiver Drehwinkelsensor nach einem der Ansprüche 1 bis 7, **dadurch gekennzeichnet, dass** die Auswerteeinrichtung (7) ein Mikrocontroller ist.

## Claims

1. Capacitive rotation angle sensor comprising a first part (1) and a second part (2), of which the first part (1) is rotatable relative to the second part (2) about a shaft (3) as the axis of rotation, and the second part (2) has at least three capacitor electrodes (4) which face the first part (1), are insulated from one another, are spaced apart from one another in the direction of the rotational movement of the axis of rotation and can be made to at least partially overlap the first part (1), and the overlap can be varied with the rotational movement, the first part (1) being a detector element for the capacitor electrodes (4) which is at floating potential and is in the form of a metal eccentric which is fastened to the shaft, and the capacitor electrodes (4) each being connected, via a tap-off line (12), to an evaluation device (7) for determining the amount of charge in each capacitor electrode (4), and the evaluation device (7) being able to generate a signal representative of the absolute position of the second part (2) relative to the first part (1), **characterized in that** the distance between the eccentric and the capacitor electrodes (4) can be varied along the axis of rotation.

2. Capacitive rotation angle sensor according to Claim 1, **characterized in that** the first part (1) can be latched at various predetermined distances from the second part (2), based on the direction along the axis of rotation, using a latching device.

3. Capacitive rotation angle sensor according to Claim 1 or 2, **characterized in that** the capacitor electrodes (4) are formed on a flat surface in a two-dimensional manner in a plane, and the eccentric has a surface which faces the capacitor electrodes (4) and is oriented parallel to the latter.

4. Capacitive rotation angle sensor according to one of Claims 1 to 3, **characterized in that** the capacitor electrodes (4) are annularly arranged around the axis of rotation at least in sections and respectively have the same areas.

5. Capacitive rotation angle sensor according to one of Claims 1 to 4, **characterized in that** the first part (1) is spring-preloaded with respect to the second part (2) based on the direction along the axis of rotation.

6. Capacitive rotation angle sensor according to one of Claims 1 to 5, **characterized in that** a summation element for adding the amounts of charge in the capacitor electrodes (4) and a comparison element for determining the distance between the eccentric and the capacitor elements (4) are provided.

7. Capacitive rotation angle sensor according to one of Claims 1 to 6, **characterized in that** the capacitor electrodes (4) are arranged on a printed circuit board (6), and interfaces for the tap-off lines (12) and/or the evaluation device (7) are provided on that side of the printed circuit board (6) which is opposite the capacitor electrodes (4).

8. Capacitive rotation angle sensor according to one of Claims 1 to 7, **characterized in that** the evaluation device (7) is a microcontroller.

## Revendications

1. Capteur d'angle de rotation capacitif comprenant une première partie et une seconde partie (1, 2), parmi lesquelles la première partie (1) est mobile en rotation autour d'un arbre (3) comme axe de rotation par rapport à la seconde partie (2), et la seconde partie (2) comprend au moins trois électrodes de condensateur (4) tournées vers la première partie (1), isolées les unes des autres et distantes les unes des autres en direction du mouvement rotatif de l'axe de rotation, lesdites électrodes pouvant être amenées en chevauchement avec la première partie (1) au moins en partie les unes avec les autres et le chevauchement pouvant varier avec le mouvement rotatif, la première partie (1) étant un élément transmetteur placé à un potentiel flottant par rapport aux électrodes de condensateur (4) sous forme d'un excentrique métallique fixé à l'arbre, et les électrodes de condensateur (4) étant reliées respectivement par un lien de connexion (12) à un dispositif d'analyse (7) pour déterminer la charge de chaque électrode de condensateur (4), et le dispositif d'analyse (7) étant apte à produire un signal représentant la position absolue de la seconde partie (2) par rapport à la première partie (1), **caractérisé en ce que** l'écart entre l'excentrique et les électrodes de condensateur (4) peut varier le long de l'axe de rotation.

2. Capteur d'angle de rotation capacitif selon la revendication 1, **caractérisé en ce que** la première partie (1) peut être enclenchée par rapport à la seconde partie (2) au moyen d'un dispositif d'enclenchement par différents intervalles prédéfinis par rapport à la direction le long de l'axe de rotation .

3. Capteur d'angle de rotation capacitif selon la revendication 1 ou 2, **caractérisé en ce que** les électrodes de condensateur (4) sont formées à plat dans un plan sur une surface plane et l'excentrique présente une surface tournée vers les électrodes de condensateur (4) et orientée parallèlement auxdites électrodes.

4. Capteur d'angle de rotation capacitif selon l'une des revendications 1 à 3, **caractérisé en ce que** les électrodes de condensateur (4) sont disposées au moins par parties en cercle autour de l'axe de rotation et présentent des superficies respectivement identiques.

5. Capteur d'angle de rotation capacitif selon l'une des revendications 1 à 4, **caractérisé en ce que** la première partie (1) est précontrainte par un ressort par rapport à la seconde partie (2) par rapport à la direction s'étendant le long de l'axe de rotation.

6. Capteur d'angle de rotation capacitif selon l'une des revendications 1 à 5, **caractérisé en ce qu'**un élément de sommation destiné à faire la somme des quantités de chargement des électrodes de condensateur (4) et un élément de comparaison pour la détermination de l'écart entre l'excentrique et les éléments de condensateur (4) sont prévus.

7. Capteur d'angle de rotation capacitif selon l'une quelconque des revendications 1 à 6, **caractérisé en ce que** les électrodes de condensateur (4) sont disposées sur une platine (6) et des interfaces sont prévues sur le côté de la platine (6) opposé aux électrodes de condensateur (4) pour les conduites de raccordement (12) et/ou le dispositif d'analyse (7).

8. Capteur d'angle de rotation capacitif selon l'une des revendications 1 à 7, **caractérisé en ce que** le dispositif d'analyse (7) est un microcontrôleur.
